# EUROPÄISCHE PATENTSCHRIFT

(11) **EP 2 346 775 B1**
(45) Veröffentlichungstag und Bekanntmachung des Hinweises auf die Patenterteilung: **12.03.2014**
(21) Anmeldenummer: 09752177.7
(22) Anmeldetag: 13.11.2009
(51) Int. Cl.: B29C 49/42, B29C 65/00, B29C 65/14, B29C 43/00, B29C 43/02, B29C 43/56, B29C 49/06, B29C 49/36, B29C 65/02, B67B 3/00, B67C 7/00, B29C 35/08, B29C 49/46, B67C 3/22, B29L 1/00, B29L 31/56

(54) **VORRICHTUNG UND VERFAHREN ZUM HERSTELLEN VON KUNSTSTOFFBEHÄLTNISSEN**
DEVICE AND METHOD FOR PRODUCING PLASTIC CONTAINERS
DISPOSITIF ET PROCÉDÉ DE FABRICATION DE CONTENANTS EN MATIÈRE PLASTIQUE

(30) Priorität: 14.11.2008 DE 102008057403
(43) Veröffentlichungstag der Anmeldung: 27.07.2011
(73) Patentinhaber: KRONES Aktiengesellschaft, 93073 Neutraubling (DE)
(72) Erfinder: HUMELE, Heinz, 93107 Thalmassing (DE)
(74) Vertreter: Bittner, Bernhard
(86) Internationale Anmeldenummer: PCT/EP2009/065086
(87) Internationale Veröffentlichungsnummer: WO 2010/055113

(56) Entgegenhaltungen:
- EP-A1- 0 794 903
- WO-A1-91/01213
- WO-A1-98/47770
- WO-A1-2004/060748
- WO-A2-2007/131701
- WO-A2-2007/140469
- DE-A1- 3 009 202
- DE-A1- 19 819 731
- DE-B- 1 111 092
- JP-A- 60 154 044
- US-A- 3 196 593
- US-A- 3 828 522

## Beschreibung

Die vorliegende Erfindung bezieht sich auf ein Verfahren und eine Vorrichtung zum Herstellen von Kunststoffbehältnissen. Derartige Verfahren sind aus dem Stand der Technik seit langem bekannt. Hierzu ist es bekannt, dass Vorformlinge zunächst mit Hilfe eines Ofens erwärmt werden und anschließend mit einer Blaseinrichtung zu Kunststoffbehältnissen expandiert werden. Anschließend werden diese Behältnisse mit einer Flüssigkeit, wie beispielsweise einem Getränk, befüllt und schließlich mit Verschlüssen verschlossen. Als Verschlüsse werden dabei üblicherweise ebenfalls Kunststoffverschlüsse verwendet, welche einer Verschließeinrichtung zugeführt und anschließend auf die Behältnisse aufgebracht werden.

Aus der DE 197 37 697 A1 ist eine Spritzblasmaschine bekannt, wobei zunächst Kunststoffrohlinge in Spritzgussformnestern geformt werden und dann von einer Transfereinrichtung aus den Spritzgußformnestern in eine Blasformeinrichtung übergeben werden. Damit erfolgt hier im Rahmen der Herstellung der Kunststoffbehältnisse auch die Herstellung von Kunststoffvorformlingen, welche anschließend zu Behältnissen expandiert werden.

Aus der DE 198 19 731 A1 sind ein Verfahren und eine Vorrichtung zum Herstellen von etikettierten Kunststoffflaschen bekannt. Dabei werden die Flaschen unmittelbar nach Verlassen einer Blasmaschine in einem kontinuierlichen Strom etikettiert, wobei auf diese Weise ein zuverlässiges Anbringen von Etiketten mit hoher Geschwindigkeit ermöglicht wird.

Die EP 0 794 903 B1 beschreibt ein System und ein Verfahren zum sterilen Verpacken von Getränken. Auch bei diesem Verfahren werden innerhalb eines Sterilraums zunächst die Vorformlinge hergestellt und diese anschließend zu Behältnissen expandiert. Weiterhin ist auch eine Sterilisationseinrichtung für die Verschlusskappen vorgesehen, die ebenfalls in dem besagten Sterilraum angeordnet ist.

Der vorliegenden Erfindung liegt die Aufgabe zugrunde, Vorrichtungen und Verfahren zum Herstellen von Kunststoffbehältnissen zu schaffen, welche eine weitere Rationalisierung dieser Herstellung erlauben. Dies wird erfindungsgemäß durch Gegenstände der unabhängigen Ansprüche 1 und 9 erreicht. Vorteilhafte Ausführungsformen und Weiterbildungen sind Gegenstand der Unteransprüche.

Bei einem erfindungsgemäßen Verfahren zum Herstellen von Kunststoffbehältnissen werden zunächst Kunststoffvorformlinge einer Blaseinrichtung zugeführt. Anschließend werden die Kunststoffvorformlinge zu Kunststoffbehältnissen geblasen. In einem weiteren Verfahrensschritt werden die Kunststoffbehältnisse mit einer Flüssigkeit befüllt und schließlich mit Kunststoffverschlüssen verschlossen. Im Zuge des Verfahrens werden die Kunststoffverschlüsse aus einem Kunststoffmaterial hergestellt und während dieses Herstellungsprozesses erwärmt.

Damit wird erfindungsgemäß vorgeschlagen, dass nicht nur die Behältnisse selbst durch Blasformung hergestellt werden, sondern die Kunststoffverschlüsse, welche anschließend die Behältnisse verschließen, ebenfalls im Rahmen dieses Verfahrens hergestellt werden. Auf diese Weise kann das Verfahren in seiner Gesamtheit ökonomisch gestaltet werden. Im Stand der Technik werden hingegen die Kunststoffverschlüsse in einem vollständig getrennten Verfahren und insbesondere auch in anderen Produktionsanlagen hergestellt. Die so hergestellten Verschlüsse werden im Stand der Technik mit den Behältnissen zusammengeführt bzw. auf diese aufgeschraubt. Daher ist es im Stand der Technik auch erforderlich, die verwendeten Verschlüsse zu sterilisieren.

Vorzugsweise wird eine Produktionsrate der Verschlussherstellung auf eine Produktionsrate der geblasenen Behältnisse angepasst. Auf diese Weise wird ein durchgängiger Produktionsprozess für die mit Verschlüssen versehenen Behältnisse erreicht. Vorzugsweise bewirkt eine Steuereinrichtung bei Auftreten von Störfällen, beispielsweise in der Blaseinrichtung, dass auch die Produktion der Verschlüsse angehalten bzw. gedrosselt wird. Damit ist bevorzugt eine übergeordnete Steuereinrichtung vorgesehen, welche den gesamten Herstellungsprozess, also insbesondere auch die Herstellung der Verschlüsse, steuert.

Durch die Erwärmung des Kunststoffverschlusses wird erreicht, dass eine Sterilisation desselben zumindest teilweise entfallen kann. Auch auf diese Weise wird der Aufwand für das entsprechende Verfahren herabgesetzt. Die Umformung der Kunststoffvorformlinge erfolgt dabei, wie aus dem Stand der Technik bekannt, durch einen Blasvorgang, bei dem die Kunststoffvorformlinge mittels Druckluft zu den Behältnissen expandiert werden. Auf diese Weise wird ein zentraler (insbesondere einstufiger) Verpackungsprozess einer Flüssigkeit in einen Behälter, sowie dessen Herstellung und bevorzugt auch dessen Etikettierung und Sterilisation, sowie dessen Befüllung und dessen Verschließung unter insbesondere sterilen Bedingungen vorgeschlagen.

Bei einem bevorzugten Verfahren wird der Verschlussrohling mittels eines mikrowellenbasierten Erwärmungsprozesses zu dem Kunststoffverschluss geformt. Dabei kann die Formung beispielsweise durch eine Pressformung erfolgen. Die hierzu erforderlichen bzw. vorteilhaften hohen Materialtemperaturen bewirken gleichzeitig eine Sterilisation des Verschlusses. Hierbei ist zu beachten, dass eine Sterilisation des Verschlusses aufgrund verschiedener Vorsprünge, wie beispielsweise der Innengewinde des Verschlusses, oftmals aufwendig ist.

Bei einem weiteren vorteilhaften Verfahren erfolgt die Herstellung des Kunststoffverschlusses wenigstens zeitweise mit Temperaturen, welche eine Sterilisation des Kunststoffverschlusses bewirken. Damit wäre es vorteilhaft auch möglich, für die Herstellung der Kunststoffverschlüsse geringfügig höhere Temperaturen zu nutzen als sie für die eigentliche Umformung des Materials erforderlich ist, um die gewünschte Sterilisationswirkung zu erreichen oder zu fördern.

Weiterhin ist es auch möglich, durch den besagten Herstellungsprozess auf gegebenenfalls ansonsten nötige Sterilisationsschritte zu verzichten.

Bei einem weiteren bevorzugten Verfahren werden die Kunststoffbehältnisse etikettiert und während dieses Etikettiervorgangs sterilisiert. Vorzugsweise wird zunächst, wie oben erwähnt, das Behältnis aus dem Vorformling nach einem üblichen Streckblasprozess erzeugt. Anschießend kann, wie gesagt ein Etikettieren, beispielsweise mittels Neckhandling-Systemen und ein gleichzeitiges Sterilisieren des Behältnisses im leeren Zustand erfolgen.

Der Vorteil dieses Verfahrens besteht darin, dass die Behältnisse nach dem Blasformungsvorgang trocken sind und sich in diesem trockenen Zustand für den Etikettiervorgang eignen. Damit ist es auch hier möglich, einerseits das Etikett (an einer Außenwandung des Behältnisses) anzubringen und gleichzeitig das Behältnis (an seiner Innenwandung) zu sterilisieren. Zum Sterilisieren kann dabei eine Elektronenstrahlvorrichtung, wie beispielsweise ein Strahlfinger verwendet werden, der in das Innere des Behältnisses eingeführt wird und während des Sterilisationsvorgangs gegenüber dem Behältnis bewegt wird. Dabei ist es sowohl möglich, dass der Strahlfinger bewegt wird, als auch, dass das Behältnis selbst in seiner Längsrichtung bewegt wird. Durch diese gleichzeitigen Etikettier- und Sterilisiervorgänge können ebenfalls Komponenten eingespart werden. Es wäre jedoch auch möglich, dass das Etikettieren erst nach dem Verschließen des Behältnisses erfolgt.

Die Herstellung der Verschlüsse erfolgt in einem Reinraum. Auf diese Weise kann verhindert werden, dass die hergestellten Verschlüsse unmittelbar wieder kontaminiert werden. Bevorzugt erfolgt auch das Etikettieren in einem Reinraum, insbesondere bei denjenigen Prozessen, bei denen gleichzeitig ein Etikettieren und ein Sterilisieren der Behältnisse durchgeführt wird.

Bevorzugt erfolgt nach der Sterilisation der leeren Behältnisse die Befüllung des Behältnisses mit einer (sterilen) Flüssigkeit und schließlich ein Verschließen des Behältnisses mit einem (bevorzugt ebenfalls sterilen) Verschluss, wobei dieser, wie oben erwähnt, durch einen parallel laufenden Herstellungsprozess erzeugt wird und direkt den gefüllten Behälter zugeführt wird, um diesen anschließend (steril) zu verschließen.

Vorteilhaft werden die Verschlüsse durch einen Pressvorgang erzeugt. Dazu kann eine Kunststoffmasse bzw. ein Kern in eine Pressform eingelegt und anschließend durch einen Stempel umgeformt werden. Ein Gewinde kann anschließend mit einem Schneidwerkzeug eingebracht werden. Es wäre auch möglich, die Verschlüsse während dieses Formgebungsvorgangs zusätzlich zu sterilisieren, beispielsweise unter Verwendung von Wasserstoffperoxid - Gas.

Die vorliegende Erfindung bezieht sich weiterhin auf eine Vorrichtung zum Herstellen von Kunststoffbehältnissen. Diese Vorrichtung weist eine Umformungseinrichtung auf, welche Kunststoffvorformlinge zu Kunststoffbehältnissen umformt. Weiterhin weist die Vorrichtung eine in der Transportrichtung der Behältnisse nach der Umformungseinrichtung angeordnete Befüllungseinrichtung auf, welche die Kunststoffbehältnisse mit einer Flüssigkeit befüllt, sowie eine Verschließeinrichtung, welche die befüllten Kunststoffbehältnisse mit Verschlüssen verschließt.

Erfindungsgemäß weist die Vorrichtung eine Verschlussherstellungseinrichtung auf, welche die Kunststoffverschlüsse aus einem Kunststoffmaterial herstellt. Diese Verschlussherstellungseinrichtung ist derart gestaltet, dass sie die Kunststoffverschlüsse unter Erwärmung derselben herstellt.

Bei einer weiteren vorteilhaften Ausführungsform weist die Verschlussherstellungsvorrichtung eine mikrowellenbasierte Erwärmungseinrichtung auf, welche die Kunststoffverschlüsse erwärmt.

Bei einer weiteren vorteilhaften Ausführungsform weist die Vorrichtung eine erste Sterilisationseinrichtung auf, welche die Kunststoffvorformlinge sterilisiert. Dabei ist es möglich, dass diese Sterilisation unmittelbar nach der Herstellung der Kunststoffvorformlinge d.h. noch vor dem Blasvorgang stattfindet. Ein weiterer Sterilisationsvorgang kann nach der Herstellung der Kunststoffbehältnisse oder auch während der Umformung stattfinden.

Weiterhin weist die Vorrichtung eine Etikettiereinrichtung auf, welche die Kunststoffbehältnisse etikettiert. Diese Etikettiereinrichtung kann dabei, wie oben erwähnt, gemeinsam mit einer Sterilisationseinrichtung ausgeführt sein. So können die Behältnisse beispielsweise mit Greif klammern an ihren Hälsen transportiert und dabei außen etikettiert und innen sterilisiert werden. Dabei ist es möglich, dass die Behältnisse sowohl zu Zwecken der Sterilisation als auch zu Zwecken des Etikettierens um ihre eigene Achse gedreht werden.

Bei einer weiteren vorteilhaften Ausführungsform weist die Vorrichtung eine Vorformlingherstellungseinrichtung auf, welche die Vorformlinge aus einem Kunststoffmaterial hergestellt.

Die Vorrichtung weist einen Reinraum auf, innerhalb dessen wenigstens die Befüllungseinrichtung, die Verschließeinrichtung und die Verschlussherstellungseinrichtung angeordnet sind. Bevorzugt sind innerhalb des Reinraums auch eine Vorrichtung zum Herstellen der Vorformlinge sowie einige oder mehrere Sterilisationseinrichtungen angeordnet.

Weitere Vorteile und Ausführungsformen ergeben sich aus den beigefügten Zeichnungen:
Darin zeigen:
   - Fig. 1: Eine blockdiagrammartige Darstellung einer erfindungsgemäßen Vorrichtung einer ersten Ausführungsform; und
   - Fig. 2: eine blockdiagrammartige Darstellung einer Vorrichtung in einer zweiten Ausführungsform.

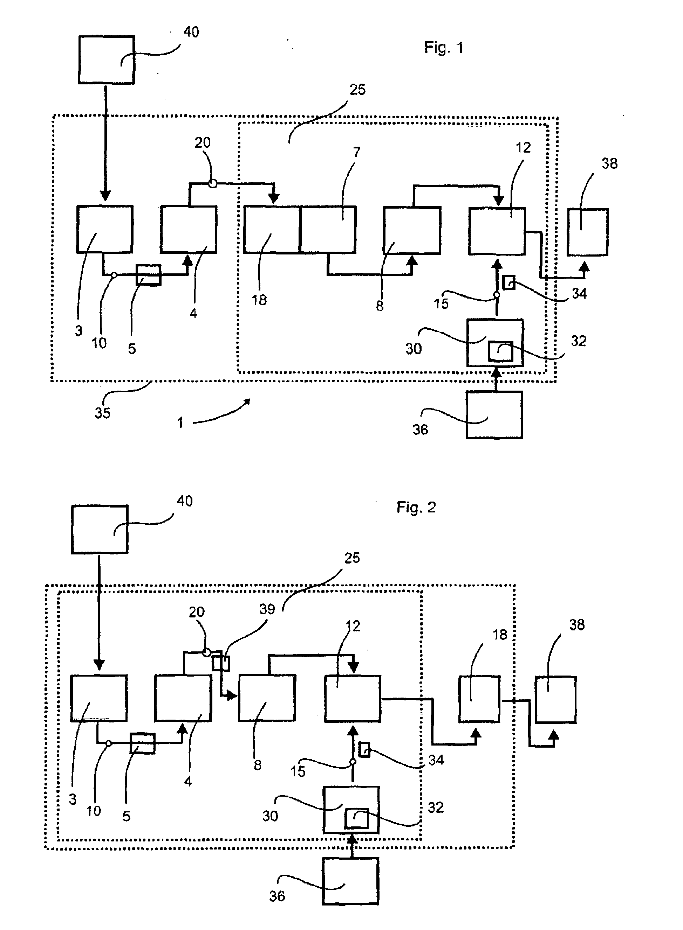

Fig. 1 zeigt ein Blockdiagramm einer erfindungsgemäßen Vorrichtung 1 in einer ersten Ausführungsform. Dabei bezieht sich das Bezugszeichen 3 auf eine Vorrichtung zum Herstellen von Kunststoffvorformlingen. Dabei ist es möglich, dass es sich hierbei um eine Rundläuferspritzgießmaschine handelt, in welche Kunststoffmaterial eingeführt wird und welche hieraus die Vorformlinge 10 herstellt. Die auf diese Weise hergestellten Vorformlinge 10 werden an eine Blaseinrichtung 4 weitergereicht und in dieser Blaseinrichtung zu Kunststoffbehältnissen expandiert. Das Bezugszeichen 5 bezieht sich dabei auf eine Sterilisationseinrichtung, welche die hergestellten Kunststoffvorformlinge 10 und insbesondere deren Innenraum sterilisiert. Dabei kann es sich um eine Sterilisationseinrichtung handeln, welche Elektronenstrahlen oder UV-Strahlung zur Sterilisation der Wandungen der Kunststoffvorformlinge nutzt. Die Vorrichtung 3 liefert dabei die hergestellten Kunststoffvorformlinge unmittelbar an die Blaseinrichtung 4.

Das Bezugszeichen 40 bezieht sich auf einen Vorrat für ein Kunststoffmaterial, welches in die Herstellungseinrichtung 3 eingeführt wird. Die auf diese Weise hergestellten Behältnisse 20 werden bei der in Fig. 1 gezeigten Ausführungsform an eine Etikettiereinrichtung 18 übergeben und an ihrer Außenseite mit Etiketten versehen. In dem gleichen Maschinenteil ist auch eine Sterilisationseinrichtung 7 vorgesehen, welche den Innenraum der Behältnisse 10 sterilisiert. Damit ist es möglich, in dem Bereich der beiden Anlagenteile 18 und 7 die Behältnisse gleichzeitig zu etikettieren und deren Innenraum zu sterilisieren. Weiterhin könnte auch zwischen der Herstellungseinrichtung 3 und der Blaseinrichtung 4 eine Heizeinrichtung vorgesehen sein, welche die Vorformlinge temperiert, um auf diese Weise den eigentlichen Blasvorgang zu erleichtern. Es ist jedoch auch möglich, dass die Herstellungseinrichtung 3 selbst eine ausreichende Temperatur der Vorformlinge erzeugt, damit diese direkt dem Umformungsvorgang in der Blaseinrichtung 4 übergeben werden können.

Dabei ist es möglich, dass auch die Blaseinrichtung 4 ein Transportkarussell aufweist und direkt von der Herstellungsvorrichtung die Vorformlinge an die Blaseinrichtung übergeben werden. Es ist jedoch auch möglich, dass zwischen der Herstellungseinrichtung 3 und der Blaseinrichtung 4 ein weiterer Konditionierkreis vorgesehen ist, in dem die Behältnisse, wie oben erwähnt, beispielsweise wärmebehandelt werden.

An die Etikettier- und Sterilisiereinrichtungen 18 und 7 schließt sich eine Befüllungseinrichtung 8 für die Behältnisse an, in der die Behältnisse mit einer Flüssigkeit und insbesondere einem Getränk befüllt werden. Dieses Getränk ist dabei ebenfalls bevorzugt steril. Anschließend werden die Behältnisse in einer Verschließeinrichtung 12 verschlossen und schließlich an eine Verpackungseinrichtung 38 übergeben, in der sie in größeren Verbünden zusammengepackt werden.

Das Bezugszeichen 36 bezieht sich auf einen Vorrat für ein Kunststoffmaterial, mit dem die Verschlüsse 15 hergestellt werden. Das Bezugszeichen 30 bezieht sich auf eine entsprechende Verschlussherstellungseinrichtung, in welcher aus dem Material Verschlüsse 15 hergestellt werden. Dabei weist diese Verschlussherstellungseinrichtung eine Erwärmungseinheit 32 auf, welche die Verschlüsse erwärmt. Die so hergestellten Verschlüsse werden dabei bevorzugt derart erwärmt, dass eine zusätzliche Sterilisation derselben nicht mehr nötig ist. Es wäre jedoch auch denkbar, eine weitere Sterilisationseinrichtung 34 vorzusehen, welche die Verschlüsse zusätzlich sterilisiert.

Weiterhin könnten auch Sterilisationseinrichtungen zwischen der Sterilisationseinrichtung 7 und der Befüllungseinrichtung 8 vorgesehen sein. Das Bezugszeichen 25 bezieht sich auf einen Sterilraum, in dem bei der in Fig. 1 gezeigten Ausführungsform sowohl die Etikettiereinrichtung 18, als auch die Sterilisationseinrichtung 7 und die Befüllungseinrichtung 8 sowie die Verschließeinrichtung 12 angeordnet sind. Vorzugsweise sind die einzelnen Maschinen 3, 4, 18, 7, 8, 12 miteinander geblockt bzw. synchronisiert, wie durch das Rechteck 35 angedeutet ist. Daneben wäre es auch möglich, innerhalb des gezeigten Sterilraums 25 weitere Sterilräume mit einem beispielsweise höheren Sterilisationsgrad zu schaffen, um einige Teilprozesse der Herstellung in diesem höheren Sterilisationsgrad ablaufen zu lassen, wie beispielsweise den Befüllungsprozess.

Bevorzugt weist die Vorrichtung eine Vielzahl von Übergabe- bzw. Transportsternen auf, welche die Behältnisse zwischen den einzelnen Vorrichtungen 3, 4, 18, 8 transportieren. Damit werden bevorzugt die Behältnisse 10, 20 vereinzelt bzw. stückweise durch die gesamte Vorrichtung 1 geführt. Die Verschlüsse 15 können auch hintereinander, z.B. in einer Stau- oder Zuführstrecke, transportiert werden.

Fig. 2 zeigt eine weitere Ausführungsform einer erfindungsgemäßen Vorrichtung. Der Unterschied zu der in Fig. 1 gezeigten Ausführungsform besteht in der Anordnung der einzelnen Behandlungseinheiten. Bei der in Fig. 2 gezeigten Ausführungsform werden zunächst Vorformlinge 10 und anschließend Behältnisse 20 hergestellt, anschließend befüllt und verschlossen und erst in einem darauf folgenden Schritt etikettiert. Dabei ist hier eine Sterilisationseinrichtung 39 zwischen der Blasmaschine 4 und der Befüllungseinrichtung 8 vorgesehen.

Jedoch findet auch hier die Herstellung der Verschlüsse 15 in einem Sterilraum 25 statt, wobei im Unterschied zu der in Fig. 1 gezeigten Ausführungsform das Etikettieren der (gefüllten) Behältnisse außerhalb dieses Sterilraums und damit an befüllten bzw. bereits verschlossenen Behältnissen vorgenommen wird. Jedoch auch bei der in Fig. 2 gezeigten Ausführungsform erfolgt schließlich auch noch ein Verpacken der Behältnisse. Die Synchronisation entspricht im Falle der in Fig. 2 gezeigten Ausführungsform der in Fig. 1 gezeigten Variante. Auch wäre es denkbar, dass lediglich die Vorformlinge und evtl. die hergestellten Behältnisse sterilisiert werden, was insoweit vorteilhaft ist, da die Vorformlinge eine geringere Oberfläche aufweisen, als die Behältnisse 20

## Patentansprüche

1. Verfahren zum Herstellen von Kunststoffbehältnissen mit den Schritten:
- Zuführen von Kunststoffvorformlingen (10) zu einer Blaseinrichtung (4) zum Umformen der Kunststoffvorformlinge;
- Umformen der Kunststoffvorformlinge (10) zu Kunststoffbehältnissen (20) mittels einer Blaseinrichtung (4);
- Befüllen der Kunststoffbehältnisse (20) mit einer Flüssigkeit;
- Verschließen der Kunststoffbehältnisse (20) mit Kunststoffverschlüssen (15);
**dadurch gekennzeichnet, dass**
die Kunststoffverschlüsse aus einem Kunststoffmaterial hergestellt werden und während dieses Herstellungsprozesses erwärmt werden, wobei ein Reinraum (25) vorgesehen ist, innerhalb dessen wenigstens eine Befüllungseinrichtung (8), eine Verschließeinrichtung (12) und eine Verschlussherstellungseinrichtung (30) angeordnet sind und wobei eine Produktionsrate der Verschlussherstellung auf eine Produktionsrate der geblasenen Kunststoffbehältnissen angepasst ist.

2. Verfahren nach Anspruch 1,
**dadurch gekennzeichnet, dass**
ein Verschlussrohling mittels eines mikrowellenbasierten Erwärmungsprozesses zu dem Kunststoffverschluss (15) geformt wird.

3. Verfahren nach Anspruch 2,
**dadurch gekennzeichnet, dass**
die Herstellung des Kunststoffverschlusses wenigstens zeitweise bei Temperaturen erfolgt, welche eine Sterilisation des Kunststoffverschlusses bewirken.

4. Verfahren nach wenigstens einem der vorangegangenen Ansprüche,
**dadurch gekennzeichnet, dass**
die Kunststoffvorformlinge vor der Zuführung in die Blaseinrichtung (4) hergestellt werden.

5. Verfahren nach Anspruch 4,
**dadurch gekennzeichnet, dass**
die Kunststoffvorformlinge (10) im Rahmen ihres Herstellungsprozesses derart erwärmt werden, dass sie nach ihrer Herstellung unmittelbar einer Blaseinrichtung (4) zuführbar sind.

6. Verfahren nach wenigstens einem der vorangegangenen Ansprüche,
**dadurch gekennzeichnet, dass**
die Kunststoffbehältnisse (20) etikettiert und während dieses Etikettiervorgangs sterilisiert werden.

7. Verfahren nach wenigstens einem der vorangegangenen Ansprüche,
**dadurch gekennzeichnet, dass**
die Herstellung der Verschlüsse (15) in einem Reinraum (25) erfolgt.

8. Verfahren nach wenigstens einem der vorangegangenen Ansprüche,
**dadurch gekennzeichnet, dass**
die Verschlüsse (15) durch einen Pressvorgang erzeugt werden.

9. Vorrichtung zum Herstellen von Kunststoffbehältnissen mit einer Blaseinrichtung (4), welche Kunststoffvorformlinge (10) zu Kunststoffbehältnissen (20) umformt, mit einer in einer Transportrichtung der Kunststoffbehältnisse (20) nach der Blaseinrichtung (4) angeordneten Befüllungseinrichtung (8), welche die Kunststoffbehältnisse (20) mit einer Flüssigkeit befüllt und einer Verschließeinrichtung (12), welche die befüllten Kunststoffbehältnisse (20) mit Verschlüssen (15) verschließt,
**dadurch gekennzeichnet, dass**
die Vorrichtung eine Verschlussherstellungseinrichtung (30) umfasst, welche die Kunststoffverschlüsse (15) aus einem Kunststoffmaterial herstellt, wobei die Verschlussherstellungseinrichtung (30) eine Erwärmungseinheit (32) aufweist, welche die Verschlüsse erwärmt und die Vorrichtung einen Reinraum (25) aufweist, innerhalb dessen wenigstens die Befüllungseinrichtung (8), die Verschließeinrichtung (12) und die Verschlussherstellungseinrichtung (30) angeordnet sind, wobei eine Produktionsrate der Verschlussherstellung auf eine Produktionsrate der umgeformten bzw. geblasenen Behältnisse anpassbar ist.

10. Vorrichtung (1) nach Anspruch 9,
**dadurch gekennzeichnet, dass**
die Verschlussherstellungsvorrichtung (30) eine mikrowellenbasierte Erwärmungseinrichtung (32) aufweist, welche die Kunststoffverschlüsse (15) erwärmt.

11. Vorrichtung nach wenigstens einem der vorangegangenen Ansprüche 9 - 10,
**dadurch gekennzeichnet, dass**
die Vorrichtung eine erste Sterilisationseinrichtung (5) aufweist, welche die Kunststoffvorformlinge (10) sterilisiert.

12. Vorrichtung nach wenigstens einem der vorangegangenen Ansprüche 9-11,
**dadurch gekennzeichnet, dass**
die Vorrichtung eine Etikettiereinrichtung (18) aufweist, welche die Kunststoffbehältnisse (20) sterilisiert.

13. Vorrichtung nach wenigstens einem der vorangegangenen Ansprüche 9-11,
**dadurch gekennzeichnet, dass**
die Vorrichtung eine Vorformlingherstellungseinrichtung (3) aufweist, welche die Vorformlinge (10) aus einem Kunsttoffmaterial herstellt.

## Claims

1. A method for producing plastic containers, comprising the following steps:
- feeding plastic preforms (10) to a moulding unit (4) for moulding the plastic containers;
- moulding said plastic preforms (10) into plastic containers (20) by means of a moulding unit (4);
- filling the plastic containers (20) with a liquid;
- closing the plastic containers (20) with plastic closures (15);
**characterised in that** the plastic closures are produced from a plastics material and are heated during this production process, wherein a clean room (25) is provided in the interior of which at least a filing unit (8), a closure unit (12) and a closure production unit (30) are arranged and wherein the production rate of the closure production is adapted to the production rate of the blow-moulded plastic containers.

2. The method as claimed in Claim 1, **characterised in that** a closure blank is moulded into the plastic closure (15) by way of a microwave-based heating process.

3. The method as claimed in Claim 2, **characterised in that** the production of the plastic closure is carried out at least at times at temperatures which cause the plastic closure to be sterilised.

4. The method as claimed in at least one of the preceding claims, **characterised in that** the plastic preforms are produced prior to being fed into the moulding unit (6).

5. The method as claimed in Claim 4, **characterised in that** the plastic preforms (10) are heated within the context of the production process thereof in such a way that they can be fed to a moulding unit (6) immediately after the production thereof.

6. The method as claimed in at least one of the preceding claims, **characterised in that** the plastic containers (20) are labelled and are sterilised during this labelling process.

7. The method as claimed in at least one of the preceding claims, **characterised in that** the production of the closures (15) is carried out in a clean room (25).

8. The method as claimed in at least one of the preceding claims, **characterised in that** the closures (15) are produced by way of a pressing process.

9. A device for producing plastic containers, comprising a moulding unit (4) which moulds plastic preforms (10) into plastic containers (20), a filling unit (8) disposed downstream of the moulding unit (6) in a transport direction of the plastic containers (20), which filling unit (20) fills the plastic containers (20) with a liquid, and a closing unit (12) which closes the filled plastic containers (20) with closures (15), **characterised in that** the device comprises a closure production unit (30) which produces the plastic closures (15) from a plastics material, wherein the closure production device comprises a heating unit (32), which heats the closures and wherein the device comprises a clean room (25) in the interior of which at least the filling unit (8), the closure unit (2) and the closure production unit (30) are arranged, wherein a production rate of the closure production is adaptable to the production rate of the moulded or respectively blowed containers.

10. The device (1) as claimed in Claim 9, **characterised in that** the closure production device (30) includes a microwave-based heating unit (32) which heats the plastic closures (15).

11. The device (1) as claimed in at least one of the preceding Claims 9-10, **characterised in that** the device includes a first sterilisation unit (5) which sterilises the plastic preforms (10).

12. The device (1) as claimed in at least one of the preceding Claims 9-11, **characterised in that** the device includes a labelling unit (18) that labels the plastic containers (20).

13. The device (1) as claimed in at least one of the preceding Claims 9-11, **characterised in that** the device includes a preform production unit (3) that produces the preforms (10) from a plastics material.

## Revendications

1. Procédé de fabrication de récipients en matière plastique, comprenant les étapes suivantes :
- amenée de préformes en matière plastique (10) vers un dispositif de soufflage (4) pour la déformation des préformes en matière plastique ;
- déformation des préformes en matière plastique (10) au moyen d'un dispositif de soufflage (4) pour obtenir des récipients en matière plastique (20) ;
- remplissage des récipients en matière plastique (20) avec un liquide ;
- obturation des récipients en matière plastique (20) avec des bouchons en matière plastique (15);
**caractérisé en ce que**
les bouchons en matière plastique sont fabriqués d'un matériau synthétique et chauffés pendant ce processus de fabrication, une salle blanche (25) étant prévue, à l'intérieur de laquelle sont disposés au moins un dispositif de remplissage (8), un dispositif d'obturation (12) et un dispositif de fabrication de bouchons (30), et une vitesse de production de la fabrication de bouchons étant ajustée à une vitesse de production des récipients en matière plastique soufflés.

2. Procédé selon la revendication 1, **caractérisé en ce qu'**
une ébauche de bouchon est formée par un processus de chauffage à base de micro-ondes pour obtenir le bouchon en matière plastique (15).

3. Procédé selon la revendication 2, **caractérisé en ce que**
la fabrication du bouchon en matière plastique est réalisée au moins temporairement à des températures provoquant une stérilisation du bouchon en matière plastique.

4. Procédé selon au moins une des revendications précédentes, **caractérisé en ce que**
les préformes en matière plastique sont fabriquées avant l'amenée vers le dispositif de soufflage (4).

5. Procédé selon la revendication 4, **caractérisé en ce que**
lors de leur processus de fabrication, les préformes en matière plastique (10) sont chauffées de manière à pouvoir être amenées immédiatement à un dispositif de soufflage (4) après leur fabrication.

6. Procédé selon au moins une des revendications précédentes, **caractérisé en ce que**
les récipients en matière plastique (20) sont étiquetés et stérilisés pendant ce processus d'étiquetage.

7. Procédé selon au moins une des revendications précédentes, **caractérisé en ce que**
la fabrication des bouchons (15) est effectuée en une salle blanche (25).

8. Procédé selon au moins une des revendications précédentes, **caractérisé en ce que**
les bouchons (15) sont fabriqués au moyen d'un processus de compression.

9. Installation de fabrication de récipients en matière plastique avec un dispositif de soufflage (4) qui déforme des préformes en matière plastique (10) pour obtenir des récipients en matière plastique (20), avec un dispositif de remplissage (8) disposé en aval du dispositif de soufflage (4) dans la direction de transport des récipients en matière plastique (20) qui remplit les récipients en matière plastique (20) avec un liquide, et un dispositif d'obturation (12) qui obture les récipients en matière plastique (20) avec des bouchons (15),
**caractérisée en ce que**
l'installation comprend un dispositif de fabrication de bouchons (30) qui fabrique les bouchons en matière plastique (15) à partir d'un matériau synthétique, le dispositif de fabrication de bouchons (30) comportant une unité de chauffage (32) qui chauffe les bouchons, et **en ce que** l'installation comprend une salle blanche (25), à l'intérieur de laquelle sont disposés au moins le dispositif de remplissage (8), le dispositif d'obturation (12) et le dispositif de fabrication de bouchons (30), une vitesse de production de la fabrication de bouchons étant ajustée à une vitesse de production des récipients en matière plastique déformés ou respectivement soufflés.

10. Installation (1) selon la revendication 9, **caractérisée en ce que**
le dispositif de fabrication de bouchons (30) comporte un dispositif de chauffage (32) à base de micro-ondes qui chauffe les bouchons en matière plastique (15).

11. Installation selon au moins une des revendications 9 et 10, **caractérisée en ce que**
l'installation comporte un premier dispositif de stérilisation (5) qui stérilise les préformes en matière plastique (10).

12. Installation selon au moins une des revendications 9 à 11, **caractérisée en ce que**
l'installation comporte un dispositif d'étiquetage (18) qui stérilise les récipients en matière plastique (20).

13. Installation selon au moins une des revendications 9 à 11, **caractérisée en ce que**
l'installation comporte un dispositif de fabrication de préformes (3) qui fabrique les préformes (10) d'un matériau synthétique.
